# EUROPÄISCHE PATENTANMELDUNG

(11) **EP 2 711 288 A1**
(43) Veröffentlichungstag der Anmeldung: **26.03.2014**
(21) Anmeldenummer: 13004577.6
(22) Anmeldetag: 19.09.2013
(51) Int. Cl.: B62M 6/75, B62M 6/45

(54) **Elektrischer Radantrieb für Leichtfahrzeuge**

(30) Priorität: 21.09.2012 DE 102012018741
(71) Anmelder: Michels, Nikolaus, 85521 Ottobrunn (DE)
(72) Erfinder: Michels, Nikolaus, 85521 Ottobrunn (DE)

(57) **Zusammenfassung**

Die Erfindung betrifft elektrische Radantriebe für Leichtfahrzeuge, welche mittels zweier oder mehrerer Außenläufer-Elektromotoren eine reibschlüssige und elektronisch steuerbare Kraftübertragung direkt auf das oder die Antriebsräder ermöglichen. Vorteilhaft sind unter anderem das sehr geringe Gewicht, die ermöglichte getriebelose Bauweise und die Fähigkeit zum widerstandsarmen Rollen des Fahrzeuges.

## Beschreibung

Leistungselektronisch gesteuerte, elektrische Antriebssysteme haben inzwischen auch für Leichtfahrzeuge und speziell für Fahrräder eine große Bedeutung erlangt. Am Beispiel der elektrifizierten Fahrräder und Mopeds sei im folgenden der Stand der Technik erläutert. Grundsätzlich sind die beschriebenen, bekannten Bauarten jedoch mehr oder weniger auch für mehrspurige leichte Fahrzeuge geeignet. Technisch und wirtschaftlich sinnvolle elektrische Antriebssyteme in diesem Anwendungsbereich erfordern generell ein sehr geringes Gewicht der Antriebssysteme und der Energiespeicher.

Bekannte Konzepte sind:
- Direkte Radantriebe mit Nabenmotoren in einem oder mehreren Rädern (z.B.: DE 10.2010.060.482 A1)
- Indirekte Radantriebe über eine Kette oder Riemen einschließlich Tretlagerantrieben (z. B.: DE 10.2010.003.650 A1)
- Indirekte Radantriebe über Winkelgetriebe
   (z. B.: DE 10.2010.026.405A1)
- Indirekte Radantriebe über Reibrollen (z. B.: DE 42 19 763 A1 sowie DE2008 010 489 U1)

Direkte Radantriebe mit Nabenmotoren sind bezüglich des Gesamtgewichtes und des unabgefederten Gewichtes der Räder ungünstig, weil die elektrischen Motoren für die sehr niedrigen Raddrehzahlen und relativ hohen Drehmomente ausgelegt werden müssen. Des weiteren wird auch bei stillgelegtem elektrischem Antrieb der Rollwiderstand des Fahrzeuges erhöht. Beide Nachteile sind im Anwendungsbereich der Leichtfahrzeuge sehr relevant.

Um das hohe Gewicht der elektrischen Maschinen zu reduzieren, arbeiten viele Nabenmotoren mit mehrstufigen, integrierten Übersetzungsgetrieben. Der Rollwiderstand und die Geräuschentwicklung werden dadurch jedoch zusätzlich ungünstig beeinflusst. Zwecks Reduktion des Rollwiderstandes sind des weiteren mechanische Freilaufeinrichtungen bekannt, welche jedoch den energetisch vorteilhaften, elektrischen Nutzbremsbetrieb verhindern.

Indirekte Radantriebe über eine Kette ermöglichen es, eine gewisse - das Motorgewicht reduzierende Übersetzung - bereits im Kettenantrieb zu realisieren. Der dort realisierbare Übersetzungsfaktor beträgt jedoch nur ca. 5 für eine Kette und typ. ca. 3 für einen Zahnriemen, so dass weitere Getriebestufen notwendig werden. Der zusätzliche Platzbedarf für den Kettenantrieb und dessen Wartung sind ebenfalls nachteilig. Ein weiterer Nachteil aller Radantriebe mit Nabenmotoren liegt darin, dass der Einbauort mit anderen Aggregaten - wie Nabenschaltung und Bremsen - konkurriert.

Falls bereits ein Kettenantrieb oder Riemenantrieb für Antriebszwecke vorhanden ist, tritt letztgenannter Nachteil jedoch nicht mehr zusätzlich auf. Dieser Fall tritt u.a. bei Fahrrädern mit elektrischem Hilfsantrieb auf, wo der Kettenantrieb für den Antrieb mit Muskelkraft bereits vorhanden ist. Um den Kettenantrieb auch für den elektrischen Hilfsantrieb zu nutzen, kann dieser mechanisch ein Drehmoment auf die Welle des Tretlagers einkoppeln. Der Übersetzungsfaktor des Ketten- oder Riemenantriebes ist nun jedoch nicht mehr frei wählbar, weil für die Muskelkraft eine Übersetzung auf hohe Raddrehzahlen und für die elektrische Maschine das Gegenteil vorteilhaft ist. Es wird deshalb i.a. ein mehrstufiges Getriebe im elektrischen Antriebsstrang erforderlich. Nachteilig ist auch, dass eine energetisch vorteilhafte, elektrische Nutzbremsung prinzipbedingt nicht möglich ist.

Des weiteren sind indirekte Radantriebe bekannt, welche die mechanische Antriebsleistung der elektrischen Maschinen über ein Winkelgetriebe auf das Antriebsrad übertragen. Gegenüber den Nabenmotoren hat dies den Vorteil, dass das Trägheitsmoment und das Gewicht der Räder nicht in vollem Umfang direkt erhöht wird. Eine Federung des Antriebsrades ist bei dieser Anordnung jedoch nur mit hohem Zusatzaufwand realisierbar. Die weiteren Nachteile - wie z. B. erhöhter Rollwiderstand, Getriebegeräusch und Einbau eines Freilaufes - entsprechen sinngemäß denen bei Nabenmotoren mit integriertem Übersetzungsgetriebe.

Aufgrund der genannten Nachteile sind auch Reibrollenantriebe für diesen Anwendungsbereich vorgeschlagen worden. Grundsätzlich sind diese für Leichtfahrzeuge - wegen der nur geringen, erforderlichen Antriebskräfte - gut geeignet. Bekannt sind sowohl Anordnungen mit Reibkontakt auf die Felge (DE2008 010 489 U1) als auch auf den Reifen (DE4219 763 A1).

Aus letztgenannter Schrift ist auch eine doppelseitig auf beide seitlichen Reifenflanken wirkende Reibrollenanordnung bekannt. Eine doppelseitige Anordnung hat den Vorteil, dass unter gleichen Reibungsbedingungen die doppelte Antriebskraft übertragen werden kann und das Antriebsrad nicht mit unerwünschten Querkräften beansprucht wird.

Nachteilig sind bei dieser bekannten Anordnung der hohe mechanische Aufwand, welcher sich bzgl. Gewicht und Kosten auswirkt, insbesondere bedingt durch:
- Das für den gegenläufigen Drehsinn der Reibrollen erforderliche Getriebe (24, 25)
- Die für die Reibrollen zusätzlich erforderlichen Wälzlager (31-34)
- Das aufwändige Verbindungsglied und Gehäuse (22) für die mechanische Verbindung der rechten mit der linken Seite.
- Das Verbindungsglied und Gehäuse (22) kann nur mit hohem Konstruktionsaufwand an unterschiedliche Reifenbreiten und Anbaumaße angepasst werden.
- Die ungünstige Regelbarkeit im Grenzbereich bei hoher Reibwertausnutzung

Letztgenannter Nachteil entsteht dadurch, dass die an beiden Reifenflanken übertragenen Kräfte nicht unabhängig voneinander auf optimale Werte geregelt werden können. Dies ist jedoch für leistungselektronisch gesteuerte Antriebe möglich und - insbesondere im elektrischen Nutzbremsbetrieb - für Reibrollenantriebe sehr vorteilhaft. Die bei variierendem Oberflächenzustand der Reibflächen übertragbaren Kräfte können dadurch besser ausgenutzt werden; Geräusche und Verschleiß können minimiert werden.

Aufgabe der Erfindung ist es einen Radantrieb für Leichtfahrzeuge anzugeben, welcher die genannten Nachteile der bekannten Anordnungen vermeidet und folgende, wesentliche Vorteile ermöglicht:
- Keine Notwendigkeit von Getrieben
- Gute Möglichkeiten zum geregelten, elektrischen Nutzbremsbetrieb
- Sehr geringes Gewicht
- Keine Erhöhung des Rollwiderstandes in Fahrzuständen ohne elektrische Antriebskraft
- Minimierte Anzahl verschleißender Komponenten

Diese Vorteile werden durch die in den Patentansprüchen dargelegten, erfindungsgemäßen Maßnahmen erreicht.

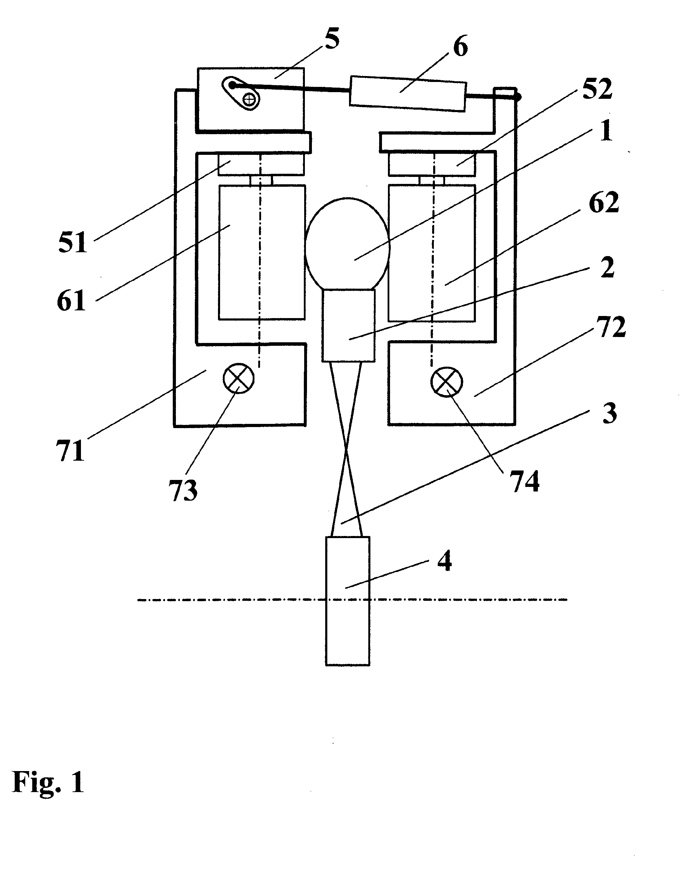

Fig. 1 zeigt, zwecks einleitender Erläuterung der Erfindung, eine vereinfachte Darstellung eines erfindungsgemäßen Radantriebes bei Ansicht in Fahrtrichtung. Es stellen dar:
- 1:: Reifen des angetriebenen Rades
- 2:: Zugehörige Felge
- 3:: Speichen des angetriebenen Rades
- 4:: Nabe des angetriebenen Rades
- 5, 6:: Andrückmechanismus, vorzugsweise bestehend aus:
5: Aktuator - vorzugsweise elektromechanisches Stellglied - zum Spannen und Entspannen des Federelementes (6)
6: Federelement - vorzugsweise spiralförmige Zugfeder - zur Erzeugung einer Anzugskraft zwischen den Statoren (51) und (52)
- 51:: Stator eines ersten, Außenläufer-Elektromotors
- 52:: Stator eines zweiten, Außenläufer-Elektromotors
- 61:: Rotor eines ersten, Außenläufer-Elektromotors
- 62:: Rotor eines zweiten, Außenläufer-Elektromotors
- 71:: Mechanisch mit dem ersten Stator (51) verbundener Befestigungswinkel
- 72:: Mechanisch mit dem zweiten Stator (52) verbundener Befestigungswinkel
- 73:: Gelenk - vorzugsweise Gleitlager - im ersten Befestigungswinkel (71)
- 74:: Gelenk - vorzugsweise Gleitlager - im zweiten Befestigungswinkel (72)
- 81:: Erster, Außenläufer-Elektromotor, bestehend aus (51) und (61)
- 82:: Zweiter, Außenläufer-Elektromotor, bestehend aus (52) und (62)

Gemäß der Erfindung werden zwei, jeweils gelenkig mit dem Fahrzeugrahmen verbundene, Außenläufer-Elektromotoren eingesetzt (81, 82), bei welchen der Rotor (61, 62) als zylindrisches Rohr ausgebildet ist. Diese bekannte Bauart ist insbesondere für permanenterregte Elektromotoren günstig.

Vorteilhafte Wirkungen dieser Maßnahme sind insbesondere:
- Separate Reibrollen und deren zugehörige Lager (i. a. mehrere Wälzlager) entfallen ersatzlos
- Die erfindungsgemäße Anordnung der Außenläufer-Elektromotoren ermöglicht eine günstige Wahl der Motorabmessungen - insbesondere ist eine Drehmomentsteigerung durch axial längere Motoren gut realisierbar
- Die Außenläufer-Elektromotoren weisen bauartbedingt ein hohes Drehmoment und einen für die Reibwertausnutzung vorteilhaften Werkstoff der Rotoren (61, 62) auf, sofern als Reibpartner der Reifen (1) dient.

Der zweitgenannte Vorteil - der freizügigen Wahl der Motorabmessungen - resultiert unter anderem aus der Tatsache, dass der Platzbedarf für separate Reibrollen und deren Lagerung entfällt. Auch die Leistungsaufteilung auf zwei Außenläufer-Elektromotoren trägt zu diesem Vorteil bei. Selbstverständlich lassen sich die Außenläufer-Elektromotoren auch in einer gegenüber Fig. 1 umgekehrten Einbaulage; d.h.: mit nach unten gerichteten Statoren einbauen. Die gezeigte Einbaulage ermöglicht jedoch einen einfacheren Schutz gegen eindringendes Wasser, z.B.: durch eine Haube über den Statoren.

Der Vorteil des gut geeigneten Werkstoffes der Rotoren resultiert aus dem Umstand, dass der rohrförmige, zylindrische Außenmantel der Rotoren bauartbedingt als magnetischer Rückschluss dient. Er besteht deshalb aus einer Eisen- bzw. Stahl-Legierung, welche bereits bei einer leicht angeraten Oberfläche einen guten Reibpartner für die Reifen darstellt, wobei der Materialabrieb vorteilhafterweise an der Reifenflanke auftritt. Möglich ist jedoch auch eine Ausführungsform, bei der die Felge statt der Reifenflanke zur Reibkraftübertragung dient. Tendenziell nachteilig wären hier jedoch die Notwendigkeit den Außenmantel des Rotors mit einem Elastomer zu beschichten, der hohe Verschleiß dieses Werkstoffes, sowie die beeinträchtigte Kühlung der Rotoren (61, 62).

Ein weiterer Vorteil des erfindungsgemäßen Radantriebes liegt in der erreichten konstruktiven Trennung des linken und rechten Antriebsteiles. Dadurch wird die Anordnung einerseits leichter, da ein schweres und aufwändiges Verbindungs- und Gehäuseteil entfällt. Auch ist eine vorteilhafte Nutzung vorhandener Befestigungspunkte von serienmäßigen Bremseinrichtungen möglich (Anspruch 10).

Des weiteren können große Toleranzen der Reifenbreite und der Befestigungen am Rahmen des Fahrzeuges in einfachster Form ausgeglichen werden. Gemäß der Erfindung wird jeder der Statoren (51, 52) der beiden Außenläufer-Elektromotoren einzeln für sich an je einem Befestigungswinkel (71, 72) gelenkig am Fahrzeugrahmen montiert. Erfindungsgemäß wird die mechanische Verbindung der linken und rechten Antriebskomponenten vorzugsweise nur durch den Aktuator (5) und ein Federelement (6) gebildet. Maße und Kennlinie dieses Federelementes lassen sich sehr einfach anpassen, so dass die erwähnten, mechanischen Toleranzen in weiten Bereichen kompensierbar sind.

Es ist alternativ auch eine Ausgestaltung des Andrückmechanismusses in Form einer selbstspannenden Mechanik möglich. Diese bekannten, mechanischen Anordnungen ermöglichen eine selbsttätige, selbstverstärkende Variation der Andrückkraft in Abhängigkeit des Antriebsdrehmomentes (Anspruch 6). Nachteilig sind hier jedoch die größere Empfindlichkeit gegenüber mechanischen Toleranzen und Veränderungen der Reibwerte.

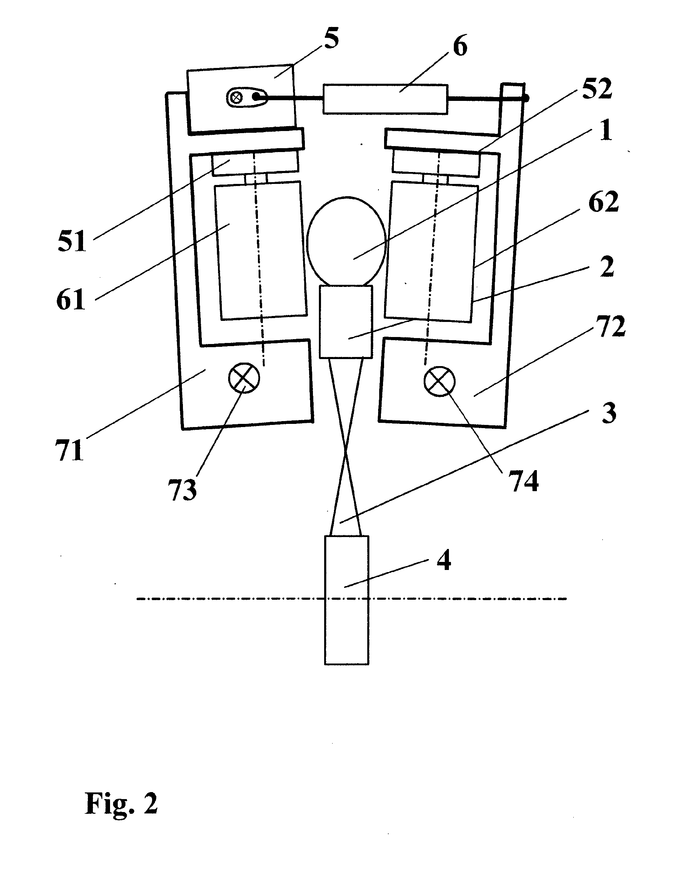

Fig. 2 zeigt eine Anordnung nach Fig. 1 in dem Zustand, welcher für ein möglichst widerstandsarmes Rollen des Fahrzeuges - ohne elektromotorische Fahr- oder Nutzbremskräfte - einstellbar ist. Der Aktuator (5) - vorzugsweise ein elekromechanisches Servo - wird zu diesem Zweck in eine Stellung gesteuert, welche zum Abheben der Rotoren (61, 62) von den Reibkontaktflächen führt. Außer der Minimierung des Rollwiderstandes hat diese erfindungsgemäße Ausgestaltung den Vorteil, dass ein elektromechanischer Aktuator sowohl vom Fahrer als auch einer elektronischen Steuerung jederzeit freizügig betätigt werden kann.

## Patentansprüche

1. Elektrischer Radantrieb für Leichtfahrzeuge nach dem Reibrollenprinzip, **dadurch gekennzeichnet, dass**
zwei Außenläufer-Elektromotoren (81, 82)
- deren Statoren (51, 52) jeweils einzeln dergestalt gelenkig am Fahrzeugrahmen befestigt sind, dass Kippbewegungen zum Reifen hin ermöglicht, eine Drehmomentabstützung hingegen gegeben ist - durch einen Andrückmechanismus (5,6) mit ihren Rotoren (61, 62) gegen jeweils eine Reifenflanke oder Felgenseite gepresst werden.

2. Elektrischer Radantrieb nach einem der vorhergehenden Ansprüche, wobei der Andrückmechanismus aus einem Aktuator (5) und einem Federelement (6) besteht.

3. Elektrischer Radantrieb nach Anspruch 1 und 2, wobei der Aktuator (5) als elektromechanisches Servo ausgeführt ist.

4. Elektrischer Radantrieb nach einem der vorhergehenden Ansprüche, wobei das Antriebsmoment jedes der Außenläufer-Elektromotoren durch eine elektronische Regelung derart geregelt wird, dass der Schlupf zwischen den Reibrollen und dem Antriebsrad begrenzt wird.

5. Elektrischer Radantrieb nach Anspruch 4, wobei die Regelung des Schlupfes über eine vorzugsweise berührungslose Drehzahlerfassung des Antriebsrades - wie beispielsweise über eine induktive Detektion der Speichen - erfolgt.

6. Elektrischer Radantrieb nach einem der vorhergehenden Ansprüche, wobei durch eine selbstspannende Mechanik sich die Andruckkraft als Funktion des Antriebsdrehmomentes variabel einstellt, so dass unnötig hohe Rollwiderstände durch zu hohe Andruckkräfte vermieden werden.

7. Elektrischer Radantrieb nach einem der vorhergehenden Ansprüche, wobei die beiden Außenläufer-Elektromotoren (81, 82) in den generatorischen Betrieb übergehen und so in einem Nutzbremsbetrieb eine erzeugte elektrische Leistung in einen Energiespeicher zurückführen, wenn das Leichtfahrzeug abgebremst werden soll.

8. Elektrischer Radantrieb nach einem der vorhergehenden Ansprüche, wobei eine Leistungselektronik zur Steuerung der Außenläufer-Elektromotoren (81, 82) ebenfalls mittels der Befestigungswinkel (71, 72) befestigt und/oder gekühlt wird.

9. Elektrischer Radantrieb nach einem der vorhergehenden Ansprüche, wobei die beiden Außenläufer-Elektromotoren (81, 82) jeweils vor dem Andrücken an die Reifenflanken oder Felgenseiten durch entsprechende elektronische Steuerung elektromotorisch dergestalt vorbeschleunigt werden, dass ein Schlupf beim ersten Berühren der Reibflächen vermieden wird.

10. Elektrischer Radantrieb nach einem der vorhergehenden Ansprüche, wobei die am Rahmen des Fahrzeuges für die Cantilever-Bremsen vorhandenen Befestigungspunkte zur Montage der Außenläufer-Elektromotoren (81, 82) und/oder deren Befestigungswinkel (71, 72) genutzt werden.

## Geänderte Patentansprüche

### Geänderte Patentansprüche gemäss Regel 137(2) EPÜ.

**1.** Elektrischer Radantrieb für Leichtfahrzeuge nach dem Reibrollenprinzip, mit zwei Elektromotoren (81, 82)
- deren Statoren (51, 52) jeweils einzeln dergestalt gelenkig am Fahrzeugrahmen befestigt sind, dass Kippbewegungen zum Reifen hin ermöglicht, eine Drehmomentabstützung hingegen gegeben ist, die durch einen Andrückmechanismus (5,6) mit ihren Rotoren (61, 62) gegen jeweils eine Reifenflanke oder Felgenseite gepresst werden, **dadurch gekennzeichnet, dass** der Andrückmechanismus einen Aktuator (5) und ein Federelement (6) enthält, welche dergestalt angeordnet sind, daß sie eine steuerbare Zugkraft zwischen den Statoren (S1/S2) erzeugen.

**2.** Elektrischer Radantrieb nach Anspruch 1, wobei der Aktuator (5) als elektromechanisches Servo ausgeführt ist.

**3.** Elektrischer Radantrieb nach einem der vorhergehenden Ansprüche, wobei das Antriebsmoment jedes der Elektromotoren durch eine elektronische Regelung derart geregelt wird, dass der Schlupf zwischen den Reibrollen und dem Antriebsrad begrenzt wird.

**4.** Elektrischer Radantrieb nach einem der vorhergehenden Ansprüche, wobei die am Rahmen des Fahrzeuges für die Cantilever-Bremsen vorhandenen Befestigungspunkte zur Montage der Elektromotoren (81, 82) und/oder deren Befestigungswinkel (71, 72) genutzt werden.

**5.** Elektrischer Radantrieb nach einem der vorhergehenden Ansprüche, wobei die beiden Elektromotoren als Außenläufer-Elektromotoren dergestalt ausgeführt sind, daß Ihre Rotor-Außenhüllen jeweils unmittelbar zur Übertragung des Reibmoments auf die Reifenflanke oder Felgenseite geeignet sind.
